# EUROPÄISCHE PATENTSCHRIFT

(11) **EP 3 875 892 B1**
(45) Veröffentlichungstag und Bekanntmachung des Hinweises auf die Patenterteilung: **01.06.2022**
(21) Anmeldenummer: 20160870.0
(22) Anmeldetag: 04.03.2020
(51) Int. Cl.: G01B 11/03

(54) **OPTISCHE MESSVORRICHTUNG, VERFAHREN ZUM ERSTELLEN EINES MESSPROGRAMMS ZUR OPTISCHEN VERMESSUNG EINES MESSOBJEKTES UND PRÜFVERFAHREN ZUR OPTISCHEN VERMESSUNG EINES MESSOBJEKTES**
OPTICAL MEASURING APPARATUS, METHOD FOR GENERATING A MEASURING PROGRAM FOR OPTICAL MEASUREMENT OF AN OBJECT AND INSPECTION METHOD FOR OPTICAL MEASUREMENT OF AN OBJECT
APPAREIL DE MESURE OPTIQUE, MÉTHODE POUR GÉNÉRER UN PROGRAMME DE MESURE OPTIQUE D'UN OBJET ET MÉTHODE DE MESURE OPTIQUE D'UN OBJET

(43) Veröffentlichungstag der Anmeldung: 08.09.2021
(73) Patentinhaber: Carl Zeiss Industrielle Messtechnik GmbH, 73447 Oberkochen (DE)
(72) Erfinder: Rieger, Stephan, 73447 Oberkochen (DE); Martz, Lionel, 73447 Oberkochen (DE); Feldengut, Tobias, 40479 Düsseldorf (DE); Michler, Erich, 73467 Kirchheim am Ries (DE); Neumaier, Kilian, 89520 Heidenheim (DE); Ritter, Markus, 89520 Heidenheim (DE)
(74) Vertreter: Altmann Stößel Dick Patentanwälte PartG mbB

(56) Entgegenhaltungen:
- EP-A1- 1 916 499
- US-A1- 2011 298 901
- US-A1- 2019 364 257

## Beschreibung

### Technisches Gebiet

Die Erfindung betrifft eine optische Messvorrichtung, eine Vorrichtung zur dimensionellen Vermessung eines Messobjekts, ein Verfahren zum Erstellen eines Messprogramms und ein Prüfverfahren zur Bestimmung mindestens einer dimensionellen Eigenschaft eines Messobjekts. Die vorliegende Erfindung betrifft insbesondere das Gebiet der Koordinatenmesstechnik, insbesondere Koordinatenmessgeräte zur optischen Vermessung eines Messobjekts.

### Technischer Hintergrund

Aus dem Stand der Technik sind verschiedene Verfahren zur optischen Vermessung eines Messobjekts bekannt. Bei derartigen Verfahren wird ein optischer Sensor eingesetzt. Der optische Sensor kann zur Aufnahme von Bildern des Messobjekts relativ zu dem Messobjekt bewegt werden. Die Bewegung kann beispielsweise manuell oder automatisch gesteuert werden.

US 2011/0298901 A1 offenbart eine optische Messvorrichtung mit einem optischen Sensor zur optischen Erfassung eines Messobjektes und einer Anzeigevorrichtung zur Abgabe von Messergebnissen, wobei Bildaufnahmepositionen anhand der Geometrie des Messobjekts und von dem Benutzer bestimmter Erfassungsparameter bestimmt werden.

Die Aufnahme der Bilder des Messobjekts kann an verschiedenen Bildaufnahmepositionen erfolgen. Beispielsweise kann das Digitalmikroskop Smartzoom 5 von ZEISS vor der eigentlichen Messung schematische Darstellungen von voraussichtlichen Bildaufnahmepositionen visualisieren. Für die Einstellung eines vom Benutzer gewünschten mit den Bildern abzudeckenden Bereichs, kann der Benutzer einen von den Bildern abzudeckenden Bereich als ganzen verändern. Bildaufnahmeparameter von einzelnen Bildern, wie Zoom, werden beim Anlegen festgelegt und sind fest und für alle Bilder gleich.

Beispielsweise kann für taktile Sensoren ein automatischer Prüfplan mit der Software CALYPSO^{®} von ZEISS erstellt werden. In CALYPSO^{®} können bei gewissen Messstrategien einzelne Antastpunkte visualisiert werden und vom Benutzer manipuliert werden. Es werden in CALYPSO^{®} direkt die Messpunkte manipuliert und somit wird automatisch die Messstrategie verändert. Die Manipulation jedes einzelnen Messpunktes ist auch nur bei Verwendung einer Messstrategie bestehend aus einzelnen Antastpunkten möglich, bei Verwendung, z.B. einer Kreisbahn oder Polylinie, ist dies nicht möglich. Hier können nur gewisse Stützpunkte manipuliert werden.

### Aufgabe der Erfindung

Es ist daher Aufgabe der vorliegenden Erfindung, eine optische Messvorrichtung, eine Vorrichtung zur dimensionellen Vermessung eines Messobjekts, ein Verfahren zum Erstellen eines Messprogramms und ein Prüfverfahren bereitzustellen, welche die Nachteile bekannter Vorrichtungen und Verfahren zumindest weitgehend vermeiden. Insbesondere soll eine benutzeranpassbare und dadurch verbesserte Bildaufnahme ermöglicht werden.

### Allgemeine Beschreibung der Erfindung

Diese Aufgabe wird gelöst durch eine Vorrichtung und ein Verfahren mit den Merkmalen der unabhängigen Patentansprüche. Bevorzugte Ausgestaltungen, welche einzeln oder in Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf', "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird eine optische Messvorrichtung vorgeschlagen.

Die optische Messvorrichtung umfasst:
- mindestens einen optischen Sensor, welcher eingerichtet ist zur optischen Erfassung mindestens eines Messobjekts an einer Mehrzahl von Bildaufnahmepositionen;
- mindestens eine Anzeigevorrichtung, welche eingerichtet ist, um für eine Mehrzahl von vorbestimmten und/oder bestimmbaren Bildaufnahmepositionen jeweils eine schematische Darstellung eines, an der jeweiligen Bildaufnahmeposition aufzunehmenden, Bildes anzuzeigen;
- mindestens eine Datenverarbeitungseinheit und mindestens eine Schnittstelle, wobei die Schnittstelle eingerichtet ist, mindestens eine Manipulationsinformation der Datenverarbeitungseinheit bereitzustellen, wobei die Datenverarbeitungseinheit eingerichtet ist, um die Bildaufnahmeposition und/oder mindestens einen Bildaufnahmeparameter mindestens eines der aufzunehmenden Bilder in Abhängigkeit von der Manipulationsinformation anzupassen.

Der Begriff "optische Messvorrichtung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine beliebige Vorrichtung beziehen, welche mindestens eine optische Sensorik, insbesondere mindestens einen optischen Sensor aufweist.

Der Begriff "optischer Sensor", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Sensor beziehen, welcher eingerichtet ist eine Abbildung, auch Bild genannt, eines Messobjekts zu erzeugen. Der optische Sensor kann ein zwei- oder dreidimensionaler optischer Sensor sein. Beispielsweise könnte der dreidimensionaler optischer Sensor mindestens einen Flugzeitsenor (ToF) aufweisen Beispielsweise kann der optische Sensor ein zweidimensionaler Bildsensor sein. Der optische Sensor kann mindestens einen Kamerasensor, beispielsweise mindestens eine CCD-Kamera, aufweisen. Der optische Sensor ist eingerichtet zur optischen Erfassung mindestens eines Messobjekts. Der Begriff "optische Erfassung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Aufnehmen eines Bildes des Messobjekts oder eines Teils des Messobjekts beziehen. Unter einem "Bild" kann eine mit dem optischen Sensor erfasste Abbildung des Messobjekts verstanden werden.

Die optische Messvorrichtung kann mindestens eine Auswerteeinheit aufweisen, welche eingerichtet ist das aufgenommene Bild auszuwerten. Die Auswertung kann ein Bestimmen einer Position mindestens eines Messpunkts relativ zu einem Referenzkoordinatensystem umfassen. Die Auswerteeinheit kann mindestens eine Datenverarbeitungseinheit umfassen, beispielsweise mindestens einen Computer oder Mikrocontroller. Die Datenverarbeitungseinheit kann einen oder mehrere flüchtige und/oder nichtflüchtige Datenspeicher aufweisen, wobei die Datenverarbeitungseinheit beispielsweise programmtechnisch eingerichtet sein kann, um das Bild auszuwerten. Die Auswerteeinheit kann weiterhin mindestens eine Schnittstelle umfassen, beispielsweise eine elektronische Schnittstelle und/oder eine Mensch-Maschine-Schnittstelle wie beispielsweise eine Eingabe-/AusgabeVorrichtung wie ein Display und/oder eine Tastatur. Beispielsweise können eine oder mehrere elektronische Verbindungen zwischen dem optischen Sensor und der Auswerteeinheit vorgesehen sein.

Der Begriff "Bildaufnahmeposition", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Position des optischen Sensors zum Zeitpunkt der Bildaufnahme beziehen. Die Position kann eine räumliche Position, insbesondere einen dreidimensionalen Punkt (x, y, z) in einem Koordinatensystem, und/oder eine Orientierung des optischen Sensors umfassen. Die Orientierung kann durch mindestens drei Winkel angegeben werden, beispielsweise Eulerwinkel oder Neigungswinkel, Rollwinkel und Gierwinkel.

Der Begriff "Bildaufnahmeparameter", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine beliebige Eigenschaft und/oder ein Merkmal des Bildes und/oder auf eine Einstellung des optischen Sensors und/oder einer weiteren Komponente der optischen Messvorrichtung, wie einem Objektiv, beziehen. Der Bildaufnahmeparameter kann mindestens einen Parameter aufweisen, ausgewählt aus der Gruppe bestehend aus: Größe, Skalierung, Translation, Rotation, Verdrehung. Derartige Parameter können durch Einstellungen des optischen Sensors und/oder einer weiteren Komponente der optischen Messvorrichtung, wie einem Objektiv, bestimmt werden, beispielsweise einer Zoomeinstellung. Der Bildaufnahmeparameter kann mindestens einen Parameter von mindestens einer Einstellung, wie eine Beleuchtungssteuerung, beispielsweise einer Hellfeld-, Dunkelfeld-, Durchlicht- und/oder koaxiale Beleuchtung, und/oder einer Kamera, wie beispielsweise Belichtungszeit und/oder Blendeneinstellung umfassen. Die Bildaufnahmeparameter können auch Einstellungen von weiteren, mit einer Steuereinheit verbundenen, Bestandteilen, beispielsweise des Koordinatenmessgeräts, umfassen, wie zum Beispiel eine Beleuchtungssteuerung, beispielswiese Hellfeld-, Dunkelfeld-, Durchlicht- und/oder koaxiale Beleuchtung, und Kameraparameter, wie zum Beispiel Belichtungszeit und Blendeneinstellung.

Der Begriff "Messobjekt", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein beliebig geformtes zu vermessendes Objekt beziehen. Beispielsweise kann das Messobjekt ausgewählt sein aus der Gruppe bestehend aus einem Prüfling, einem Werkstück und einem zu vermessenden Bauteil. Beispielsweise kann es sich bei dem Messobjekt um ein flächiges Messobjekt handeln, beispielsweise mit einer ausgedehnten Oberfläche.

Die optische Messvorrichtung kann eingerichtet sein, mindestens ein Prüfmerkmal des Messobjekts zu bestimmen und/oder zu überprüfen. Der Begriff "Prüfmerkmal", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein zu bestimmendes und/oder zu überprüfendes und/oder zu testendes Merkmal mindestens eines Messelements beziehen. Das Bestimmen und/oder Überprüfen kann ein Bestimmen und/oder Überprüfen von Maßabweichungen und/oder Formabweichungen und/oder Lageabweichungen umfassen. Das Prüfmerkmal kann ein Merkmal sein ausgewählt aus der Gruppe bestehend aus: mindestens eine Länge; mindestens ein Winkelmaß, mindestens ein Oberflächenparameter, eine Form, eine Lage. Der Begriff "Messelement", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein vorbestimmtes oder vorbestimmbares geometrisches Element beziehen. Das Messelement kann beispielsweise ein Geometrieelement sein, ausgewählt aus der Gruppe bestehend aus einem Kreis, einem Zylinder, einem Rechteck, einer Gerade, oder einem anderen Element mit einer Regelgeometrie. Das Prüfmerkmal kann beispielsweise durch Messung von Punkten und/oder Linien und/oder Flächen des Messobjekts bestimmt und/oder überprüft werden. Die optische Messvorrichtung kann eingerichtet sein, um zur Bestimmung und/oder Überprüfung des Prüfmerkmals eine Mehrzahl von Bildern an verschiedenen Bildaufnahmepositionen aufzunehmen. Die aufgenommenen Bilder können von der Auswerteeinheit ausgewertet werden und jeweils mindestens ein Messpunkt bestimmt werden.

Das Bestimmen und/oder Überprüfen des Prüfmerkmals kann unter Verwendung einer Messstrategie erfolgen. Der Begriff "Messstrategie", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Anleitung zum Lösen einer Messaufgabe beziehen. Die Messstrategie umfasst mindestens eine Erfassungsstrategie, welche die Bildaufnahme, insbesondere Bildaufnahmepositionen, bestimmt.

Die Messstrategie kann von einem Benutzer der optischen Messvorrichtung festgelegt werden. Die Messstrategie kann über die Schnittstelle der optischen Messvorrichtung bestimmbar sein. Beispielswiese kann die Schnittstelle eine Mensch-Maschine-Schnittstelle sein und die Messstrategie über die Mensch-Maschine-Schnittstelle bestimmt werden. Der Benutzer kann im Vorfeld der Messung ein Messelement bestimmen, beispielsweise durch Auswahl eines Messelements aus einer Datenbank, und die Messstrategie festlegen.

Die optische Messvorrichtung kann eingerichtet sein, um die Bildaufnahmepositionen abhängig von der Messstrategie zu bestimmen. Die Bildaufnahmeposition kann eine für eine gewählte Messstrategie vorprogrammierte Bildaufnahmeposition sein. Die optische Messvorrichtung, insbesondere die Datenverarbeitungseinheit oder ein weiterer Prozessor der optischen Messvorrichtung, kann eingerichtet sein, einen Algorithmus zum Bestimmen der Bildaufnahmepositionen auszuführen, um die gewählte Messstrategie ausführen zu können. Alternativ kann die optische Messvorrichtung eingerichtet sein, dass der Benutzer die Bildaufnahmepositionen selbst wählen kann. Die Bildaufnahmepositionen können über die Schnittstelle eingebbar sein. Unter "vorbestimmten und/oder bestimmbaren Bildaufnahmepositionen" können durch den Algorithmus bestimmte Bildaufnahmepositionen oder durch den Benutzer eingegebene Bildaufnahmepositionen verstanden werden.

Eine relative Position des optischen Sensors und des Messobjekts kann einstellbar sein. Beispielsweise kann zur Aufnahme der Mehrzahl von Messpunkten eine Vielzahl von relativen Positionen des optischen Sensors und des Messobjekts einstellbar sein. Beispielsweise kann der optische Sensor verfahrbar sein, beispielsweise in mindestens drei Raumrichtungen. Beispielsweise kann der optische Sensor verschiebbar sein und das Messobjekt auf einer festen oder beweglichen Auflage liegen. Auch Ausführungsformen mit einem fixen optischen Sensor sind denkbar, wobei in diesen Ausführungsformen dann das Messobjekt verschoben werden kann.

Eine relative Bewegung von optischen Sensor und Messobjekt kann durch eine Gerätesteuerung der optischen Messvorrichtung und/oder einer externen Gerätesteuerung gesteuert werden. Die relative Bewegung von optischen Sensor und Messobjekt kann durch ein Messprogramm bestimmt sein. Beispielsweise kann zu einer Vermessung des Messobjekts ein Messprogramm vorgesehen sein, welches in Steuerbefehle für die Gerätesteuerung umgesetzt werden kann. Das Messprogramm kann abhängig von der Messstrategie, dem Messelement und dem zu bestimmenden und/oder zu prüfenden Prüfmerkmal sein.

Die Gerätesteuerung kann mindestens eine Datenverarbeitungseinheit umfassen, beispielsweise mindestens einen Computer oder Mikrocontroller. Die Datenverarbeitungseinheit kann einen oder mehrere flüchtige und/oder nichtflüchtige Datenspeicher aufweisen, wobei die Datenverarbeitungseinheit beispielsweise programmtechnisch eingerichtet sein kann, um den optischen Sensor anzusteuern. Die Gerätesteuerung kann weiterhin mindestens eine Schnittstelle umfassen, beispielsweise eine elektronische Schnittstelle und/oder eine Mensch-Maschine-Schnittstelle wie beispielsweise eine Eingabe-/AusgabeVorrichtung wie ein Display und/oder eine Tastatur. Beispielsweise können eine oder mehrere elektronische Verbindungen zwischen dem optischen Sensor und der Gerätesteuerung vorgesehen sein.

Der Begriff "Anzeigevorrichtung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine beliebige Vorrichtung zur optischen Visualisierung beziehen. Die Anzeigevorrichtung kann beispielsweise ein Display und/oder einen Monitor und/oder eine Augmented Reality (AR)-Vorrichtung und/oder eine Virtual Reality (VR)-Vorrichtung aufweisen.

Der Begriff "schematische Darstellung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine grundsätzlich beliebige Visualisierung des aufzunehmenden Bildes beziehen. Die schematische Darstellung kann eine Darstellung eines, insbesondere von der Datenverarbeitungseinheit, berechneten Bildes sein. Die schematische Darstellung kann beispielsweise ein Rahmen und/oder eine Kontur und/oder Umriss des Bildes sein. Die schematische Darstellung kann derart sein, dass die jeweilige Bildaufnahmeposition den Mittelpunkt der schematischen Darstellung definiert. Die Anzeigevorrichtung kann eingerichtet sein, die schematische Darstellung lagerichtig anzuzeigen. Unter "lagerichtig" kann verstanden werden, dass die schematische Darstellung Position und Orientierung des aufzunehmenden Bildes korrekt repräsentiert, insbesondere relativ zu einem Bezugssystem und/oder einem Bezugselement. Die Anzeigevorrichtung kann eingerichtet sein, um die schematische Darstellung der aufzunehmenden Bilder schematisch mit einer Darstellung eines Messraums und/oder mit einer Darstellung des Messobjekts und/oder mit einer Darstellung eines Messelements anzuzeigen. Beispielsweise kann der optische Sensor und/oder ein weiterer Bildsensor der optischen Messvorrichtung eingerichtet sein, um ein Übersichtsbild des Messraums und/oder des Messobjekts aufzunehmen. Die Anzeigevorrichtung kann eingerichtet sein, das Übersichtsbild mit der schematischen Darstellung zu überlagern. Beispielsweise könnte eine Messaufgabe darin bestehen, insbesondere zu Dokumentationszwecken, dass Bilder von Objekten im Messraum angefertigt werden sollen. Die Anfertigung dieser Bilder kann an verschiedenen Bildaufnahmepositionen erfolgen, welche von der Anzeigevorrichtung als schematische Darstellung visualisiert werden können und vom Benutzer manipuliert werden können.

Der Begriff "Datenverarbeitungseinheit", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine beliebige Logikschaltung, zum Ausführen grundlegender Operationen eines Computers oder Systems, beziehen und/oder allgemein auf eine Vorrichtung, welche zum Ausführen von Berechnungen oder logischen Operationen eingerichtet ist. Die Datenverarbeitungseinheit kann einen Prozessor oder eine Prozessoreinheit aufweisen. Die Datenverarbeitungseinheit kann mindestens einen Mikroprozessor aufweisen. Die Datenverarbeitungseinheit kann beispielsweise eine arithmetisch-logische Einheit (ALU), eine Gleitkommaeinheit (FPU), wie einen mathematischen Koprozessor oder numerischen Koprozessor, eine Mehrzahl von Registern, und einen Arbeitsspeicher, beispielsweise einen Cache Arbeitsspeicher aufweisen. Die Datenverarbeitungseinheit kann einen Multi-Core-Prozessor aufweisen. Die Datenverarbeitungseinheit kann eine Zentrale Verarbeitungseinheit (CPU) aufweisen. Alternativ oder zusätzlich kann die Datenverarbeitungseinheit eine oder mehrere Anwendungsspezifische integrierte Schaltungen und/oder eine oder mehrere Field Programmable Gate Arrays (FPGAs) oder ähnliches aufweisen.

Der Begriff "Schnittstelle", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Element oder Teil der optischen Messvorrichtung beziehen, welches eingerichtet ist Informationen zu übertragen. Die Schnittstelle kann eine Kommunikationsschnittstelle, insbesondere eine Datenschnittstelle sein, welche eingerichtet ist Daten von einer anderen Vorrichtung und/oder von einem Benutzer zu empfangen und/oder Daten von der Schnittstelle an weitere Komponenten der optischen Messvorrichtung und/oder an externe Vorrichtungen zu übermitteln. Die Schnittstelle kann mindestens eine elektronische Schnittstelle und/oder eine Mensch-Maschine-Schnittstelle aufweisen, wie beispielsweise eine Eingabe-/Ausgabe-Vorrichtung wie ein Display und/oder eine Tastatur. Die Schnittstelle kann mindestens eine Datenverbindung aufweisen, beispielweise eine Bluetooth-Verbindung, eine NFC-Verbindung oder eine andere Verbindung. Die Schnittstelle kann mindestens ein Netzwerk aufweisen oder Teil eines Netzwerkes sein. Die Schnittstelle kann mindestens einen Internet-Port, mindestens einen USB-Port, mindestens ein Laufwerk oder ein Webinterface aufweisen.

Der Begriff "Manipulation", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Einflussnahme, beispielsweise eine Anpassung und/oder Änderung, auf die Bildaufnahmeposition und/oder mindestens einen Bildaufnahmeparameter beziehen. Die Manipulation kann durch den Benutzer erfolgen. Der Begriff "Manipulationsinformation", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Information zur Einflussnahme auf die Bildaufnahmeposition und/oder den Bildaufnahmeparameter beziehen. Die Manipulationsinformation kann beispielsweise eine Information über eine Größe und/oder Skalierung und/oder Translation und/oder Rotation und/oder Verdrehung mindestens eines aufzunehmenden Bildes umfassen. Die Manipulationsinformation kann beispielsweise eine Information über eine Änderung einer Bildaufnahmeposition mindestens eines aufzunehmenden Bildes umfassen. Die Schnittstelle kann eingerichtet sein, dem Benutzer die Möglichkeit zu geben die schematischen Darstellungen zu manipulieren. Die Schnittstelle kann eine Mensch-Maschine-Schnittstelle sein. Die Manipulationsinformation kann von einem Benutzer über die Schnittstelle eingebbar sein.

Die Anzeigevorrichtung und/oder die Schnittstelle können eingerichtet sein, den Benutzer mögliche Manipulationen, wie Anpassen der Größe und/oder Skalierung und/oder Translation und/oder Rotation und/oder Verdrehung, anzuzeigen und/oder zur Auswahl zu stellen. Es können alle möglichen Manipulationen angezeigt und/oder zur Auswahl gestellt werden. Alternativ können nur eine oder einige Manipulationen angeboten werden. Beispielsweise kann eine Manipulation des Zooms nicht angezeigt und/oder zur Auswahl gestellt werden, selbst wenn der optische Sensor dieses unterstützt.

Die optische Messvorrichtung kann eingerichtet sein, dass die Bildaufnahmeparameter und/oder Bildaufnahmepositionen nur eingeschränkt manipuliert werden können. Beispielsweise die Bildaufnahmeposition und/oder der Bildaufnahmeparameter innerhalb eines von einer Messstrategie vorgegebenen Bereichs anpassbar sind.

Mindestens eines der schematisch dargestellten Bilder kann eine spezifische Eigenschaft aufweisen. Die Datenverarbeitungseinheit kann eingerichtet sein, dass wenn der Benutzer dieses Bild entfernt, diese Eigenschaft an ein anderes der schematisch dargestellten Bilder weiterzugeben. Beispielsweise kann es nötig sein, vor der Messung eines Messelements per Autofokus den korrekten Aufnahmeabstand einzustellen. Dieser Autofokus wird nur an einer Stelle in der Messstrategie ausgeführt, zum Beispiel üblicherweise in der Mitte der ersten Bildaufnahmeposition. Bei einer Entfernung dieses Bildes kann der Autofokus an einer anderen Position durchgeführt werden. Gleichermaßen kann beispielweise eine automatische Einstellung der Beleuchtung durchgeführt werden.

Die Datenverarbeitungseinheit ist eingerichtet, um die Bildaufnahmeposition und/oder mindestens einen Bildaufnahmeparameter mindestens eines der aufzunehmenden Bilder in Abhängigkeit von der Manipulationsinformation anzupassen. Der Begriff "anpassen", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Ändern und/oder Einstellen und/oder Bestimmen beziehen. Das Anpassen der Bildaufnahmeposition kann ein Entfernen der Bildaufnahmeposition oder ein Hinzufügen der Bildaufnahmeposition und/oder Verschieben der Bildaufnahmeposition umfassen. Die Bildaufnahmepositionen und/oder die Bildaufnahmeparameter der mit der Anzeigevorrichtung schematisch dargestellten aufzunehmenden Bilder können einzeln angepasst werden. Die Bildaufnahmepositionen und/oder die Bildaufnahmeparameter mindestens zweier schematisch dargestellter, aufzunehmender Bilder können anpassbar sein. Die jeweilige Bildaufnahmeposition und/oder der jeweilige Bildaufnahmeparameter der aufzunehmenden Bilder können einzeln und/oder unabhängig voneinander anpassbar sein. Die Bildaufnahmeposition und/oder der Bildaufnahmeparameter aller schematisch dargestellten, aufzunehmenden Bilder können anpassbar sein, insbesondere nacheinander. Die Bildaufnahmeposition und/oder der Bildaufnahmeparameter für mindestens eines der aufzunehmenden Bilder kann unabhängig von den Bildaufnahmepositionen und/oder den Bildaufnahmeparametern der anderen Bilder anpassbar sein. Die optische Messvorrichtung kann eingerichtet sein, dass die Bildaufnahmeposition und/oder der Bildaufnahmeparameter mindestens eines der aufzunehmenden Bilder manipulationsgeschützt ist. Beispielsweise könnte der Algorithmus zum Bestimmen der Bildaufnahmepositionen bestimmte Bilder oder bestimmte Eigenschaften einzelner Bilder vor Veränderungen schützen, weil diese für eine korrekte Ausführung der gewählten Messstrategie zwingend erforderlich sind.

Die Anzeigevorrichtung und/oder die Schnittstelle können eingerichtet sein, eine Information, welche Bildaufnahmeposition und/oder welcher Bildaufnahmeparameter verändert wurde, nach außen zu geben, so dass ein anderer Teil der optischen Messvorrichtung und/oder eines Koordinatenmessgeräts umfassend die optische Messvorrichtung und/oder eines Industrieroboters und/oder eines Mikroskops umfassend die optische Messvorrichtung diese Information berücksichtigen kann. Beispielsweise könnte bei einer erneuten Ausführung des Algorithmus zum Bestimmen der Bildaufnahmepositionen, um die gewählte Messstrategie ausführen zu können, die veränderte Bildaufnahmeposition und/oder der veränderte Bildaufnahmeparameter unverändert belassen werden.

Die Anzeigevorrichtung kann eingerichtet sein, um eine schematische Darstellung der aufzunehmenden Bilder mit angepasster Bildaufnahmeposition und/oder angepasstem Bildaufnahmeparameter anzuzeigen. Die Anzeigevorrichtung kann eingerichtet sein, um die schematische Darstellung der aufzunehmenden Bilder mit angepasster Bildaufnahmeposition und/oder angepasstem Bildaufnahmeparameter jeweils zu markieren. Die Anzeigevorrichtung kann eingerichtet sein, um aufzunehmende Bilder mit überlappenden Bildaufnahmebereichen abweichend zu markieren.

In einer Ausführungsform kann der optische Sensor ein dreidimensionaler optischer Sensor sein und/oder mindestens einen dreidimensionalen optischen Sensor umfassen. Die schematische Darstellung kann eine Darstellung des gesamten Aufnahmebereichs des optischen Sensors in der 3D Szene umfassen, beispielsweise einen Quader, bei einem telezentrischen optischen Sensor, oder ein Pyramidenstumpf bei einem nicht telezentrischen optischen Sensor. Eine dem optischen Sensor zugewandte Seite dieses Körpers kann an einem minimalen Arbeitsabstand und eine abgewandte Seite am maximalen Arbeitsabstand des Sensors positioniert sein. Alternativ oder zusätzlich kann eine Vereinfachung der schematischen Darstellung auf eine Darstellung entsprechend dem Fall eines zweidimensionalen optischen Sensors umfassen. Die schematische Darstellung kann an einem bestimmten Punkt innerhalb des Messbereichs des dreidimensionalen optischen Sensors positioniert werden, beispielsweise dem mittleren Arbeitsabstand oder einem beliebigen anderen, typischen Arbeitsabstand.

In einem weiteren Aspekt wird eine Vorrichtung zur dimensionellen Vermessung eines Messobjekts vorgeschlagen. Die dimensionelle Vermessung kann eine Bestimmung mindestens einer Eigenschaft des Messobjekts und/oder eines Teils des Messobjekts umfassen, wie eine Vermessung von Durchmesser, Länge, Abstand, Form und Lage.

Die Vorrichtung kann ein Koordinatenmessgerät, ein Industrieroboter oder ein Mikroskop sein. Die Vorrichtung weist mindestens eine erfindungsgemäße optische Messvorrichtung nach einem der vorhergehenden, beschriebenen Ausführungsformen oder einer weiteren unten beschriebenen Ausführungsform auf. Für Einzelheiten und Ausführungsformen in Bezug auf die Vorrichtung wird auf die Beschreibung der erfindungsgemäßen optischen Messvorrichtung verwiesen.

Das Koordinatenmessgerät kann ein Portalmessgerät oder ein Brückenmessgerät sein. Das Koordinatenmessgerät kann einen Messtisch zur Auflage mindestens eines zu vermessenden Objekts aufweisen. Das Koordinatenmessgerät kann mindestens ein Portal aufweisen, welches mindestens eine erste vertikale Säule, mindestens eine zweite vertikale Säule und eine die erste vertikale Säule und die zweite vertikale Säule verbindende Traverse aufweist. Mindestens eine vertikale Säule ausgewählt aus der ersten und zweiten vertikalen Säule kann auf dem Messtisch beweglich gelagert sein. Die horizontale Richtung kann eine Richtung entlang einer y-Achse sein. Das Koordinatenmessgerät kann ein Koordinatensystem, beispielsweise ein kartesisches Koordinatensystem oder ein Kugelkoordinatensystem, aufweisen. Auch andere Koordinatensysteme sind denkbar. Eine x-Achse kann senkrecht zur y-Achse, in einer Ebene der Auflagefläche des Messtischs verlaufen. Senkrecht zu der Ebene der Auflagefläche, in eine vertikale Richtung, kann sich eine z-Achse, auch longitudinale Achse genannt, erstrecken. Die vertikalen Säulen können sich entlang der z-Achse erstrecken. Die Traverse kann sich entlang der x-Achse erstrecken. Das Koordinatenmessgerät kann mindestens einen Messschlitten aufweisen, welcher entlang der Traverse beweglich gelagert ist. Unter einem Messschlitten kann allgemein ein Schlitten verstanden werden, welcher eingerichtet ist, direkt oder mittels weiterer Bauteile mindestens einer Sensorvorrichtung aufzunehmen. In dem Messschlitten kann eine in eine vertikale Richtung, beispielsweise entlang der z-Achse, bewegliche Pinole gelagert sein. An einem unteren Ende, insbesondere einem in Richtung Auflagefläche zeigenden Ende, der Pinole kann beispielsweise der optische Sensor angeordnet sein. Anstelle des optischen Sensors kann für Messungen in einem anderen Messmodus ein taktiler Sensor eingewechselt werden. Die Sensoren können austauschbar mit der Vorrichtung verbunden sein.

Bei einer Ausgestaltung der Vorrichtung als Mikroskop kann der optische Sensor als Mikroskop-Kamera ausgestaltet sein. Die Mikroskop-Kamera kann mindestens eine Beleuchtungsvorrichtung aufweisen, welche eingerichtet ist, einen Beleuchtungslichtstrahl zu erzeugen. Die Mikroskop-Kamera kann mindestens eine Mikroskop-Optik aufweisen, welche eingerichtet ist, den Beleuchtungslichtstrahl zu fokussieren und mindestens ein vergrößertes Bild des Messobjekts in mindestens einer Bildebene zu erzeugen. Die Mikroskop-Optik kann mindestens eine Linse und/oder ein Linsensystem und/oder ein Objektiv, insbesondere ein Zoomobjektiv aufweisen. Die Mikroskop-Kamera kann eingerichtet sein, das vergrößerte Bild aufzunehmen.

In einem weiteren Aspekt wird ein Verfahren zum Erstellen eines Messprogramms zur Bestimmung mindestens einer dimensionellen Vermessung eines Messobjekts mit einem optischen Sensor vorgeschlagen.

Das Verfahren weist die folgenden Schritte auf:
a) Bereitstellen einer Messstrategie;
b) Bereitstellen einer Mehrzahl von vorbestimmten und/oder bestimmbaren Bildaufnahmepositionen;
c) Anzeigen jeweils einer schematischen Darstellung eines, an der jeweiligen vorbestimmten und/oder bestimmbaren Bildaufnahmeposition aufzunehmenden, Bildes;
d) Bereitstellen mindestens einer Manipulationsinformation einer Datenverarbeitungseinheit über mindestens eine Schnittstelle;
e) Anpassen der Bildaufnahmeposition und/oder mindestens eines Bildaufnahmeparameters mindestens eines der aufzunehmenden Bilder in Abhängigkeit von der Manipulationsinformation;
f) Erstellen des Messprogramms zur Aufnahme von Bildern des Messobjekts mit dem optischen Sensor unter Verwendung der angepassten Bildaufnahmeposition und/oder des angepassten Bildaufnahmeparameters.

In dem Verfahren kann eine erfindungsgemäße optische Messvorrichtung verwendet werden. Für Einzelheiten und Ausführungsformen in Bezug auf das Verfahren wird auf die Beschreibung der erfindungsgemäßen optischen Messvorrichtung verwiesen.

Die Verfahrensschritte können in der angegebenen Reihenfolge durchgeführt werden, wobei einer oder mehrere der Schritte zumindest teilweise auch gleichzeitig durchgeführt werden können und wobei einer oder mehrere der Schritte mehrfach wiederholt werden können. Darüber hinaus können weitere Schritte unabhängig davon, ob sie in der vorliegenden Anmeldung erwähnt werden oder nicht, zusätzlich ausgeführt werden.

In einem weiteren Aspekt wird ein Prüfverfahren zur Bestimmung mindestens einer dimensionellen Eigenschaft eines Messobjekts vorgeschlagen. Das Verfahren kann nicht nur während der Programmierung, sondern auch bei der Ausführung eines Prüfablaufs genutzt werden. Dem Benutzer können, beispielsweise vor der Messung, die Bildaufnahmepositionen schematisch angezeigt werden. Der Benutzer kann diese bei Bedarf manipulieren und dann die Messung starten. Diese Manipulationen können entweder für die folgenden Abläufe gespeichert oder verworfen werden.

Das Verfahren weist die folgenden Schritte auf:
I) Bereitstellen einer Mehrzahl von vorbestimmten und/oder bestimmbaren Bildaufnahmepositionen;
II) Anzeigen jeweils einer schematischen Darstellung eines, an der jeweiligen vorbestimmten und/oder bestimmbaren Bildaufnahmeposition aufzunehmenden, Bildes;
III) Bereitstellen mindestens einer Manipulationsinformation einer Datenverarbeitungseinheit über mindestens eine Schnittstelle;
IV) Anpassen der Bildaufnahmeposition und/oder mindestens eines Bildaufnahmeparameters mindestens eines der aufzunehmenden Bilder in Abhängigkeit von der Manipulationsinformation;
V) Aufnehmen einer Mehrzahl von Bildern des Messobjekts mit mindestens einem optischen Sensor unter Berücksichtigung der angepassten Bildaufnahmepositionen und/oder des angepassten Bildaufnahmeparameters.

In dem Verfahren kann eine erfindungsgemäße optische Messvorrichtung verwendet werden. Für Einzelheiten und Ausführungsformen in Bezug auf das Verfahren wird auf die Beschreibung der erfindungsgemäßen optischen Messvorrichtung verwiesen.

Die Verfahrensschritte können in der angegebenen Reihenfolge durchgeführt werden, wobei einer oder mehrere der Schritte zumindest teilweise auch gleichzeitig durchgeführt werden können und wobei einer oder mehrere der Schritte mehrfach wiederholt werden können. Darüber hinaus können weitere Schritte unabhängig davon, ob sie in der vorliegenden Anmeldung erwähnt werden oder nicht, zusätzlich ausgeführt werden.

Ferner wird im Rahmen der vorliegenden Erfindung ein Computerprogramm vorgeschlagen, das bei Ablauf auf einem Computer oder Computer-Netzwerk mindestens eines der erfindungsgemäßen Verfahren in einer seiner Ausgestaltungen ausführt, insbesondere die Verfahrensschritte a) bis f) des Verfahrens zum Erstellen eines Messprogramms zur Bestimmung mindestens einer dimensionellen Vermessung eines Messobjekts und/oder die Verfahrensschritte I) bis V) des Prüfverfahrens.

Weiterhin wird im Rahmen der vorliegenden Erfindung ein Computerprogramm mit Programmcode-Mitteln vorgeschlagen, um die erfindungsgemäßen Verfahren in einer ihrer Ausgestaltungen durchzuführen, wenn das Programm auf einem Computer oder ComputerNetzwerk ausgeführt wird. Insbesondere können die Programmcode-Mittel auf einem computerlesbaren Datenträger gespeichert sein.

Der Begriffe "computerlesbarer Datenträger" und "computerlesbares Speichermedium", wie sie hier verwendet werden, können sich insbesondere auf nicht-transitorische Datenspeicher beziehen, beispielsweise ein Hardware-Datenspeichermedium, auf welchem computer-ausführbare Instruktionen gespeichert sind. Der computerlesbare Datenträger oder das computerlesbare Speichermedium können insbesondere ein Speichermedium wie ein Random-Access Memory (RAM) und/oder ein Read-Only Memory (ROM) sein oder umfassen.

Außerdem wird im Rahmen der vorliegenden Erfindung ein Datenträger vorgeschlagen, auf dem eine Datenstruktur gespeichert ist, die nach einem Laden in einen Arbeits-und/oder Hauptspeicher eines Computers oder Computer-Netzwerkes die erfindungsgemäßen Verfahren in einer ihrer Ausgestaltungen ausführen kann.

Auch wird im Rahmen der vorliegenden Erfindung ein Computerprogramm-Produkt mit auf einem maschinenlesbaren Träger gespeicherten Programmcode-Mitteln vorgeschlagen, um die erfindungsgemäßen Verfahren in einer ihrer Ausgestaltungen durchzuführen, wenn das Programm auf einem Computer oder Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Schließlich wird im Rahmen der vorliegenden Erfindung ein moduliertes Datensignal vorgeschlagen, welches von einem Computersystem oder Computernetzwerk ausführbare Instruktionen zum Ausführen eines Verfahrens nach einer der beschriebenen Ausführungsformen enthält.

Im Hinblick auf die computer-implementierten Aspekte der Erfindung können einer, mehrere oder sogar alle Verfahrensschritte der Verfahren gemäß einer oder mehreren der hier vorgeschlagenen Ausgestaltungen mittels eines Computers oder Computer-Netzwerks durchgeführt werden. Somit können, allgemein, jegliche der Verfahrensschritte, einschließlich der Bereitstellung und/oder Manipulation von Daten mittels eines Computers oder Computer-Netzwerks durchgeführt werden. Allgemein können diese Schritte jegliche der Verfahrensschritte umfassen, ausgenommen der Schritte, welche manuelle Arbeit erfordern, beispielsweise das Bereitstellen von Werkstücken und/oder bestimmte Aspekte der Durchführung tatsächlicher Messungen.

Die vorgeschlagenen Vorrichtungen und Verfahren weisen zahlreiche Vorteile gegenüber bekannten Vorrichtungen und verfahren auf. So können die vorgeschlagenen Vorrichtungen und Verfahren eine benutzeranpassbare und dadurch verbesserte Bildaufnahme ermöglichen. Weitere Vorteile können sein, eine Optimierung von Überschneidungen von Messbildern und damit die Optimierung der Messstrategie zu ermöglichen, entweder zur Reduktion von Bildaufnahmen an sich und damit zur Reduktion von Messzeiten oder zur gezielten Erhöhung von Bildaufnahmen zum Zwecke der Mehrfachabdeckung bestimmter Bereiche des Messobjektes. Weiter kann der Benutzer Informationen über die bevorstehende Messzeit der bevorstehenden Messung und/oder über das bevorstehende Aufkommen des Datenvolumens der Messung erhalten. Eine Kollisionsvermeidung, insbesondere in schwierigen Fällen, z.B. wenn wenig Platz im Messbereich ist, kann möglich sein.

### Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: eine schematische Darstellung einer Ausführungsform einer erfindungsgemäßen Vorrichtung zur dimensionellen Vermessung eines Messobjekts mit einer erfindungsgemäßen optischen Messvorrichtung; und
- Figur 2: ein Flussdiagramm einer Ausführungsform eines Verfahren zum Erstellen eines Messprogramms zur Bestimmung mindestens einer dimensionellen Vermessung eines Messobjekts mit mindestens einem optischen Sensor.

### Beschreibung der Ausführungsbeispiele

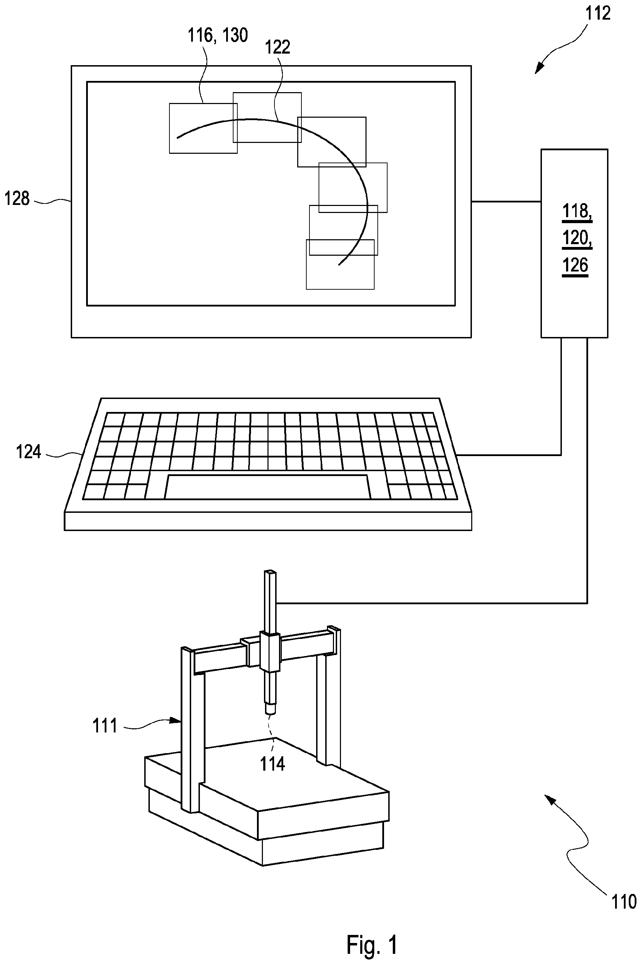

Figur 1 zeigt eine schematische Darstellung einer Ausführungsform einer erfindungsgemäßen Vorrichtung 110 zur dimensionellen Vermessung eines Messobjekts mit einer erfindungsgemäßen optischen Messvorrichtung 112. Die Vorrichtung 110 kann ein Koordinatenmessgerät 111, wie in Figur 1 gezeigt, ein Industrieroboter oder ein Mikroskop sein.

Das Koordinatenmessgerät 111 kann ein Portalmessgerät oder ein Brückenmessgerät sein. Das Koordinatenmessgerät 111 kann einen Messtisch zur Auflage mindestens eines zu vermessenden Objekts aufweisen. Das Koordinatenmessgerät 111 kann mindestens ein Portal aufweisen, welches mindestens eine erste vertikale Säule, mindestens eine zweite vertikale Säule und eine die erste vertikale Säule und die zweite vertikale Säule verbindende Traverse aufweist. Die vertikalen Säulen können auf dem Messtisch beweglich gelagert sein oder mittels in Verbindung stehender Führungen beweglich gelagert sein.

Das Messobjekt kann ein beliebig geformtes zu vermessendes Objekt sein. Beispielsweise kann das Messobjekt ausgewählt sein aus der Gruppe bestehend aus einem Prüfling, einem Werkstück und einem zu vermessenden Bauteil. Beispielsweise kann es sich bei dem Messobjekt um ein flächiges Messobjekt handeln, beispielsweise mit einer ausgedehnten Oberfläche.

Die optische Messvorrichtung 112 umfasst mindestens einen optischen Sensor 114, welcher eingerichtet ist zur optischen Erfassung mindestens eines Messobjekts an einer Mehrzahl von Bildaufnahmepositionen 116. Die Bildaufnahmeposition 116 kann eine Position des optischen Sensors 114 zum Zeitpunkt der Bildaufnahme sein. Die Position kann eine räumliche Position, insbesondere einen dreidimensionalen Punkt (x, y, z) in einem Koordinatensystem, und/oder eine Orientierung des optischen Sensors 114 umfassen. Die Orientierung kann durch mindestens drei Winkel angegeben werden, beispielsweise Eulerwinkel oder Neigungswinkel, Rollwinkel und Gierwinkel.

Der optischer Sensor 114 kann eingerichtet sein eine Abbildung, auch Bild genannt, eines Messobjekts zu erzeugen. Der optische Sensor 114 kann ein zwei- oder dreidimensionaler optischer Sensor sein. Beispielsweise kann der optische Sensor 114 ein zweidimensionaler Bildsensor sein. Der optische Sensor 114 kann mindestens einen Kamerasensor, beispielsweise mindestens eine CCD-Kamera, aufweisen.

Die optische Messvorrichtung 112 kann mindestens eine Auswerteeinheit 118 aufweisen, welche eingerichtet ist das aufgenommene Bild auszuwerten. Die Auswertung 118 kann ein Bestimmen einer Position mindestens eines Messpunkts relativ zu einem Referenzkoordinatensystem umfassen. Die Auswerteeinheit 118 kann Teil einer Datenverarbeitungseinheit 120 der optischen Messvorrichtung 112 sein. Die Datenverarbeitungseinheit 120 kann einen oder mehrere flüchtige und/oder nichtflüchtige Datenspeicher aufweisen, wobei die Datenverarbeitungseinheit 120 beispielsweise programmtechnisch eingerichtet sein kann, um das Bild auszuwerten. Die Datenverarbeitungseinheit 120 kann einen Prozessor oder eine Prozessoreinheit aufweisen, beispielsweise mindestens einen Mikroprozessor. Die Auswerteeinheit 118 kann weiterhin mindestens eine Schnittstelle umfassen, beispielsweise eine elektronische Schnittstelle und/oder eine Mensch-Maschine-Schnittstelle wie beispielsweise eine Eingabe-/Ausgabe-Vorrichtung wie ein Display und/oder eine Tastatur. Beispielsweise können eine oder mehrere elektronische Verbindungen zwischen dem optischen Sensor 114 und der Auswerteeinheit 118 vorgesehen sein.

Die optische Messvorrichtung 112 kann eingerichtet sein, mindestens ein Prüfmerkmal des Messobjekts zu bestimmen und/oder zu überprüfen. Das Prüfmerkmal kann ein zu bestimmendes und/oder zu überprüfendes und/oder zu testendes Merkmal mindestens eines Messelements 122 sein und/oder aufweisen. Das Bestimmen und/oder Überprüfen kann ein Bestimmen und/oder Überprüfen von Maßabweichungen und/oder Formabweichungen und/oder Lageabweichungen umfassen. Das Prüfmerkmal kann ein Merkmal sein ausgewählt aus der Gruppe bestehend aus: mindestens eine Länge; mindestens ein Winkelmaß, mindestens ein Oberflächenparameter, eine Form, eine Lage. Das Messelement 122 kann ein vorbestimmtes oder vorbestimmbares geometrisches Element sein. Das Messelement 122 kann beispielsweise ein Geometrieelement sein, ausgewählt aus der Gruppe bestehend aus einem Kreis, einem Zylinder, einem Rechteck, einer Gerade, oder einem anderen Element mit einer Regelgeometrie. Das Prüfmerkmal kann beispielsweise durch Messung von Punkten und/oder Linien und/oder Flächen des Messobjekts bestimmt und/oder überprüft werden. Die optische Messvorrichtung 112 kann eingerichtet sein, um zur Bestimmung und/oder Überprüfung des Prüfmerkmals eine Mehrzahl von Bildern an verschiedenen Bildaufnahmepositionen 116 aufzunehmen. Die aufgenommenen Bilder können von der Auswerteeinheit 118 ausgewertet werden und jeweils mindestens ein Messpunkt bestimmt werden.

Das Bestimmen und/oder Überprüfen des Prüfmerkmals kann unter Verwendung einer Messstrategie erfolgen. Die Messstrategie umfasst mindestens eine Erfassungsstrategie, welche die Bildaufnahme, insbesondere Bildaufnahmepositionen 116, bestimmt.

Die Messstrategie kann von einem Benutzer der optischen Messvorrichtung 112 festgelegt werden. Die optische Messvorrichtung 112 umfasst mindestens eine Schnittstelle 124. Die Messstrategie kann über die Schnittstelle 124 bestimmbar sein. Beispielswiese kann die Schnittstelle 124 eine Mensch-Maschine-Schnittstelle sein und die Messstrategie über die Mensch-Maschine-Schnittstelle bestimmt werden. Der Benutzer kann im Vorfeld der Messung ein Messelement 122 bestimmen, beispielsweise durch Auswahl eines Messelements 112 aus einer Datenbank, und die Messstrategie festlegen.

Die optische Messvorrichtung 112 kann eingerichtet sein, um die Bildaufnahmepositionen 116 abhängig von der Messstrategie zu bestimmen. Die Bildaufnahmeposition 116 kann eine für eine gewählte Messstrategie vorprogrammierte Bildaufnahmeposition sein. Die optische Messvorrichtung 112, insbesondere die Datenverarbeitungseinheit 120 oder ein weiterer Prozessor der optischen Messvorrichtung 112, kann eingerichtet sein, einen Algorithmus zum Bestimmen der Bildaufnahmepositionen 116 auszuführen, um die gewählte Messstrategie ausführen zu können. Alternativ kann die optische Messvorrichtung 112 eingerichtet sein, dass der Benutzer die Bildaufnahmepositionen 116 selbst wählen kann. Die Bildaufnahmepositionen 116 können über die Schnittstelle 124 eingebbar sein.

Eine relative Position des optischen Sensors 114 und des Messobjekts kann einstellbar sein. Beispielsweise kann zur Aufnahme der Mehrzahl von Messpunkten eine Vielzahl von relativen Positionen des optischen Sensors 114 und des Messobjekts einstellbar sein. Beispielsweise kann der optische Sensor 114 verfahrbar sein, beispielsweise in mindestens drei Raumrichtungen. Beispielsweise kann der optische Sensor 114 verschiebbar sein und das Messobjekt auf einer festen oder beweglichen Auflage liegen. Auch Ausführungsformen mit einem fixen optischen Sensor 114 sind denkbar, wobei in diesen Ausführungsformen dann das Messobjekt verschoben werden kann.

Eine relative Bewegung von optischen Sensor 114 und Messobjekt kann durch eine Gerätesteuerung 126 der optischen Messvorrichtung 112 und/oder einer externen Gerätesteuerung gesteuert werden. Die relative Bewegung von optischen Sensor 114 und Messobjekt kann durch ein Messprogramm bestimmt sein. Beispielsweise kann zu einer Vermessung des Messobjekts ein Messprogramm vorgesehen sein, welches in Steuerbefehle für die Gerätesteuerung 126 umgesetzt werden kann. Das Messprogramm kann abhängig von der Messstrategie, dem Messelement und dem zu bestimmenden und/oder zu prüfenden Prüfmerkmal sein. Die Gerätesteuerung kann Teil der Datenverarbeitungseinheit 120 sein.

Die optische Messvorrichtung 112 umfasst mindestens eine Anzeigevorrichtung 128, welche eingerichtet ist, um für eine Mehrzahl von vorbestimmten und/oder bestimmbaren Bildaufnahmepositionen 116 jeweils eine schematische Darstellung 130 eines, an der jeweiligen Bildaufnahmeposition 116 aufzunehmenden, Bildes anzuzeigen. Die Anzeigevorrichtung 128 kann eine beliebige Vorrichtung zur optischen Visualisierung sein. Die Anzeigevorrichtung 128 kann beispielsweise ein Display und/oder einen Monitor und/oder eine Augmented Reality (AR)-Vorrichtung und/oder eine Virtual Reality (VR)-Vorrichtung aufweisen.

Die schematische Darstellung 130 kann eine Darstellung eines, insbesondere von der Datenverarbeitungseinheit, berechneten Bildes sein. Die schematische Darstellung 130 kann beispielsweise ein Rahmen und/oder eine Kontur und/oder Umriss des Bildes sein. Die schematische Darstellung 130 kann derart sein, dass die jeweilige Bildaufnahmeposition 116 den Mittelpunkt der schematischen Darstellung 130 definiert. Die Anzeigevorrichtung 128 kann eingerichtet sein, die schematische Darstellung 130 lagerichtig anzuzeigen. Die Anzeigevorrichtung 128 kann eingerichtet sein, um die schematische Darstellung 130 der aufzunehmenden Bilder schematisch mit einer Darstellung eines Messraums und/oder mit einer Darstellung des Messobjekts und/oder, wie in Figur 1 gezeigt, mit einer Darstellung eines Messelements 122 anzuzeigen. Beispielsweise kann der optische Sensor 114 und/oder ein weiterer Bildsensor der optischen Messvorrichtung 112 eingerichtet sein, um ein Übersichtsbild des Messraums und/oder des Messobjekts aufzunehmen. Die Anzeigevorrichtung 128 kann eingerichtet sein, das Übersichtsbild mit der schematischen Darstellung 130 zu überlagern. Beispielsweise könnte eine Messaufgabe darin bestehen, insbesondere zu Dokumentationszwecken, dass Bilder von Objekten im Messraum angefertigt werden sollen. Die Anfertigung dieser Bilder kann an verschiedenen Bildaufnahmepositionen 116 erfolgen, welche von der Anzeigevorrichtung 128 als schematische Darstellung 130 visualisiert werden können und vom Benutzer manipuliert werden können.

Die optische Messvorrichtung 112 umfasst mindestens eine Datenverarbeitungseinheit 120 und die mindestens eine Schnittstelle 124. Die Schnittstelle 124 ist eingerichtet mindestens eine Manipulationsinformation der Datenverarbeitungseinheit 120 bereitzustellen. Die Datenverarbeitungseinheit 120 ist eingerichtet, um die Bildaufnahmeposition und/oder mindestens einen Bildaufnahmeparameter mindestens eines der aufzunehmenden Bilder in Abhängigkeit von der Manipulationsinformation anzupassen.

Die Datenverarbeitungseinheit 120 kann einen Prozessor oder eine Prozessoreinheit aufweisen. Die Datenverarbeitungseinheit 120 kann beispielsweise eine arithmetisch-logische Einheit (ALU), eine Gleitkommaeinheit (FPU), wie einen mathematischen Koprozessor oder numerischen Koprozessor, eine Mehrzahl von Registern, und einen Arbeitsspeicher, beispielsweise einen Cache Arbeitsspeicher. Die Datenverarbeitungseinheit 120 kann einen Multi-Core-Prozessor aufweisen. Die Datenverarbeitungseinheit 120 kann eine Zentrale Verarbeitungseinheit (CPU) aufweisen. Alternativ oder zusätzlich kann die Datenverarbeitungseinheit 120 eine oder mehrere Anwendungsspezifische integrierte Schaltungen und/oder eine oder mehrere Field Programmable Gate Arrays (FPGAs) oder ähnliches aufweisen.

Die Schnittstelle 124 kann eine Kommunikationsschnittstelle, insbesondere eine Datenschnittstelle sein, welche eingerichtet ist Daten von einer anderen Vorrichtung und/oder von einem Benutzer zu empfangen und/oder Daten von der Schnittstelle 124 an weitere Komponenten der optischen Messvorrichtung 112 und/oder an externe Vorrichtungen zu übermitteln. Die Schnittstelle 124 kann mindestens eine elektronische Schnittstelle und/oder eine Mensch-Maschine-Schnittstelle aufweisen, wie beispielsweise eine Eingabe-/Ausgabe-Vorrichtung wie ein Display und/oder eine Tastatur. Die Schnittstelle kann mindestens eine Datenverbindung aufweisen, beispielweise eine Bluetooth-Verbindung, eine NFC-Verbindung oder eine andere Verbindung. Die Schnittstelle 124 kann mindestens ein Netzwerk aufweisen oder Teil eines Netzwerkes sein. Die Schnittstelle 124 kann mindestens einen Internet-Port, mindestens einen USB-Port, mindestens ein Laufwerk oder ein Webinterface aufweisen.

Die Manipulation der schematischen Darstellung 120 kann eine Einflussnahme, beispielsweise eine Anpassung und/oder Änderung, auf die Bildaufnahmeposition 116 und/oder mindestens einen Bildaufnahmeparameter umfassen. Die Manipulation kann durch den Benutzer erfolgen. Der Bildaufnahmeparameter kann eine beliebige Eigenschaft und/oder ein Merkmal des Bildes und/oder auf eine Einstellung des optischen Sensors 114 und/oder einer weiteren Komponente der optischen Messvorrichtung 112, wie einem Objektiv, sein. Der Bildaufnahmeparameter kann mindestens einen Parameter aufweisen, ausgewählt aus der Gruppe bestehend aus: Größe, Skalierung, Translation, Rotation, Verdrehung. Derartige Parameter können durch Einstellungen des optischen Sensors 114 und/oder einer weiteren Komponente der optischen Messvorrichtung 112, wie einem Objektiv, bestimmt werden, beispielsweise einer Zoomeinstellung. Der Bildaufnahmeparameter kann mindestens einen Parameter von mindestens einer Einstellung, wie eine Beleuchtungssteuerung, beispielsweise einer Hellfeld-, Dunkelfeld-, Durchlicht- und/oder koaxiale Beleuchtung, und/oder einer Kamera, wie beispielsweise Belichtungszeit und/oder Blendeneinstellung umfassen. Die Bildaufnahmeparameter können auch Einstellungen von weiteren, mit einer Steuereinheit verbundenen, Bestandteilen, beispielsweise des Koordinatenmessgeräts 111, umfassen, wie zum Beispiel eine Beleuchtungssteuerung, beispielswiese Hellfeld-, Dunkelfeld-, Durchlicht- und/oder koaxiale Beleuchtung, und Kameraparameter, wie zum Beispiel Belichtungszeit und Blendeneinstellung.

Die Manipulationsinformation kann eine Information zur Einflussnahme auf die Bildaufnahmeposition und/oder den Bildaufnahmeparameter umfassen. Die Manipulationsinformation kann beispielsweise eine Information über eine Größe und/oder Skalierung und/oder Translation und/oder Rotation und/oder Verdrehung mindestens eines aufzunehmenden Bildes umfassen. Die Manipulationsinformation kann beispielsweise eine Information über eine Änderung einer Bildaufnahmeposition 116 mindestens eines aufzunehmenden Bildes umfassen. Die Schnittstelle 124 kann eingerichtet sein, dem Benutzer die Möglichkeit zu geben die schematischen Darstellungen zu manipulieren. Die Schnittstelle 124 kann eine Mensch-Maschine-Schnittstelle sein. Die Manipulationsinformation kann von einem Benutzer über die Schnittstelle 124 eingebbar sein.

Die Anzeigevorrichtung 128 und/oder die Schnittstelle 124 können eingerichtet sein, den Benutzer mögliche Manipulationen, wie Anpassen der Größe und/oder Skalierung und/oder Translation und/oder Rotation und/oder Verdrehung, anzuzeigen und/oder zur Auswahl zu stellen. Es können alle möglichen Manipulationen angezeigt und/oder zur Auswahl gestellt werden. Alternativ können nur eine oder einige Manipulationen angeboten werden. Beispielsweise kann eine Manipulation des Zooms nicht angezeigt und/oder zur Auswahl gestellt werden, selbst wenn der optische Sensor 114 dieses unterstützt.

Die optische Messvorrichtung 112 kann eingerichtet sein, dass die Bildaufnahmeparameter und/oder Bildaufnahmepositionen 116 nur eingeschränkt manipuliert werden können. Beispielsweise können die Bildaufnahmeposition 116 und/oder der Bildaufnahmeparameter innerhalb eines von einer Messstrategie vorgegebenen Bereichs anpassbar sein.

Mindestens eines der schematisch dargestellten Bilder kann eine spezifische Eigenschaft aufweisen. Beispielsweise kann es nötig sein, vor der Messung eines Messelements 122 per Autofokus den korrekten Aufnahmeabstand einzustellen. Dieser Autofokus wird nur an einer Stelle in der Messstrategie ausgeführt, zum Beispiel üblicherweise in der Mitte der ersten Bildaufnahmeposition. Bei einer Entfernung dieses Bild kann der Autofokus an einer anderen Position durchgeführt werden. Gleichermaßen kann beispielweise eine automatische Einstellung der Beleuchtung durchgeführt werden. Die Datenverarbeitungseinheit 120 kann eingerichtet sein, dass wenn der Benutzer dieses Bild entfernt, diese Eigenschaft an ein anderes der schematisch dargestellten Bilder weiterzugeben.

Die Datenverarbeitungseinheit 120 ist eingerichtet, um die Bildaufnahmeposition und/oder mindestens einen Bildaufnahmeparameter mindestens eines der aufzunehmenden Bilder in Abhängigkeit von der Manipulationsinformation anzupassen. Das Anpassen der Bildaufnahmeposition 116 kann ein Entfernen der Bildaufnahmeposition 116 oder ein Hinzufügen der Bildaufnahmeposition 116 und/oder Verschieben der Bildaufnahmeposition 116 umfassen. Die Bildaufnahmepositionen 116 und/oder die Bildaufnahmeparameter der mit der Anzeigevorrichtung 128 schematisch dargestellten aufzunehmenden Bilder können einzeln angepasst werden. Die Bildaufnahmepositionen 116 und/oder die Bildaufnahmeparameter mindestens zweier schematisch dargestellten, aufzunehmender Bilder können anpassbar sein. Die jeweilige Bildaufnahmeposition 116 und/oder der jeweilige Bildaufnahmeparameter der aufzunehmenden Bilder können einzeln und/oder unabhängig voneinander anpassbar sein. Die Bildaufnahmeposition 116 und/oder der Bildaufnahmeparameter aller schematisch dargestellten, aufzunehmenden Bilder können anpassbar sein, insbesondere nacheinander. Die Bildaufnahmeposition 116 und/oder der Bildaufnahmeparameter für mindestens eines der aufzunehmenden Bilder kann unabhängig von den Bildaufnahmepositionen 116 und/oder den Bildaufnahmeparametern der anderen Bilder anpassbar sein. Die optische Messvorrichtung 112 kann eingerichtet sein, dass die Bildaufnahmeposition 116 und/oder der Bildaufnahmeparameter mindestens eines der aufzunehmenden Bilder manipulationsgeschützt ist. Beispielsweise könnte der Algorithmus zum Bestimmen der Bildaufnahmepositionen 116 bestimmte Bilder oder bestimmte Eigenschaften einzelner Bilder vor Veränderungen schützen, weil diese für eine korrekte Ausführung der gewählten Messstrategie zwingend erforderlich sind.

Die Anzeigevorrichtung 128 und/oder die Schnittstelle 124 können eingerichtet sein, eine Information, welche Bildaufnahmeposition 116 und/oder welcher Bildaufnahmeparameter verändert wurde, nach außen zu geben, so dass ein anderer Teil der optischen Messvorrichtung 112 und/oder der Vorrichtung 110 umfassend die optische Messvorrichtung 112 diese Information berücksichtigen kann. Beispielsweise könnte bei einer erneuten Ausführung des Algorithmus zum Bestimmen der Bildaufnahmepositionen 116, um die gewählte Messstrategie ausführen zu können, die veränderte Bildaufnahmeposition 116 und/oder der veränderte Bildaufnahmeparameter unverändert belassen werden.

Die Anzeigevorrichtung 128 kann eingerichtet sein, um eine schematische Darstellung 130 der aufzunehmenden Bilder mit angepasster Bildaufnahmeposition und/oder angepasstem Bildaufnahmeparameter anzuzeigen. Die Anzeigevorrichtung 128 kann eingerichtet sein, um die schematische Darstellung der aufzunehmenden Bilder mit angepasster Bildaufnahmeposition und/oder angepasstem Bildaufnahmeparameter jeweils zu markieren. Die Anzeigevorrichtung 128 kann eingerichtet sein, um aufzunehmende Bilder mit überlappenden Bildaufnahmebereichen abweichend zu markieren.

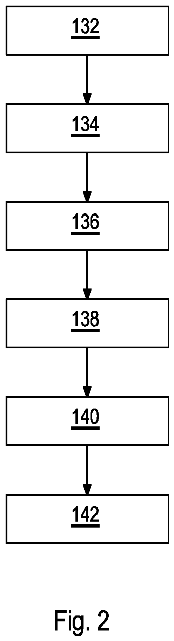

Figur 2 zeigt ein Flussdiagramm eines Verfahrens zum Erstellen eines Messprogramms zur Bestimmung mindestens einer dimensionellen Vermessung eines Messobjekts mit dem optischen Sensor 114. Das Verfahren weist die folgenden Schritte auf:
a) (Bezugsziffer 132) Bereitstellen einer Messstrategie;
b) (Bezugsziffer 134) Bereitstellen einer Mehrzahl von vorbestimmten und/oder bestimmbaren Bildaufnahmepositionen 116;
c) (Bezugsziffer 136) Anzeigen jeweils einer schematischen Darstellung 130 eines, an der jeweiligen vorbestimmten und/oder bestimmbaren Bildaufnahmeposition 116 aufzunehmenden, Bildes;
d) (Bezugsziffer 138) Bereitstellen mindestens einer Manipulationsinformation der Datenverarbeitungseinheit 120 über die mindestens eine Schnittstelle 124;
e) (Bezugsziffer 140) Anpassen der Bildaufnahmeposition 116 und/oder mindestens eines Bildaufnahmeparameters mindestens eines der aufzunehmenden Bilder in Abhängigkeit von der Manipulationsinformation;
f) (Bezugsziffer 142) Erstellen des Messprogramms zur Aufnahme von Bildern des Messobjekts mit dem optischen Sensor 114 unter Verwendung der angepassten Bildaufnahmeposition und/oder des angepassten Bildaufnahmeparameters.

In dem Verfahren kann eine erfindungsgemäße optische Messvorrichtung 112 verwendet werden. Für Einzelheiten und Ausführungsformen in Bezug auf das Verfahren wird auf die Beschreibung der erfindungsgemäßen optischen Messvorrichtung 112 in Figur 1 verwiesen.

### Bezugszeichenliste

- 110: Vorrichtung
- 111: Koordinatenmessgerät
- 112: optische Messvorrichtung
- 114: optischer Sensor
- 116: Bildaufnahmepositionen
- 118: Auswerteeinheit
- 120: Datenverarbeitungseinheit
- 122: Messelement
- 124: Schnittstelle
- 126: Gerätesteuerung
- 128: Anzeigevorrichtung
- 130: schematische Darstellung der Bildaufnahmeposition 116
- 132: Verfahrensschritt a)
- 134: Verfahrensschritt b)
- 136: Verfahrensschritt c)
- 138: Verfahrensschritt d)
- 140: Verfahrensschritt e)
- 142: Verfahrensschritt f)

## Patentansprüche

1. Optische Messvorrichtung (112) umfassend:
- mindestens einen optischen Sensor (114), welcher eingerichtet ist zur optischen Erfassung mindestens eines Messobjekts an einer Mehrzahl von Bildaufnahmepositionen (116);
- mindestens eine Anzeigevorrichtung (128), welche eingerichtet ist, um für eine Mehrzahl von vorbestimmten und/oder bestimmbaren Bildaufnahmepositionen (116) jeweils eine schematische Darstellung (130) eines, an der jeweiligen Bildaufnahmeposition (116) aufzunehmenden, Bildes anzuzeigen;
- mindestens eine Datenverarbeitungseinheit (120) und mindestens eine Schnittstelle (124), wobei die Schnittstelle (124) eingerichtet ist, mindestens eine Manipulationsinformation der Datenverarbeitungseinheit (120) bereitzustellen, wobei die Datenverarbeitungseinheit (120) eingerichtet ist, um die Bildaufnahmeposition (116) und/oder mindestens einen Bildaufnahmeparameter mindestens eines der aufzunehmenden Bilder in Abhängigkeit von der Manipulationsinformation anzupassen.

2. Optische Messvorrichtung (112) nach dem vorhergehenden Anspruch, wobei die Bildaufnahmepositionen (116) und/oder die Bildaufnahmeparameter mindestens zweier schematisch dargestellter, aufzunehmender Bilder anpassbar ist, wobei die jeweilige Bildaufnahmeposition (116) und/oder der jeweilige Bildaufnahmeparameter der aufzunehmenden Bilder einzeln und/oder unabhängig voneinander anpassbar ist.

3. Optische Messvorrichtung (112) nach einem der vorhergehenden Ansprüche, wobei die optische Messvorrichtung (112) eingerichtet ist, dass die Bildaufnahmeposition (116) und/oder der Bildaufnahmeparameter mindestens eines der aufzunehmenden Bilder manipulationsgeschützt ist.

4. Optische Messvorrichtung (112) nach einem der vorhergehenden Ansprüche, wobei die Schnittstelle (124) eine Mensch-Maschine-Schnittstelle ist, wobei die Manipulationsinformation von einem Benutzer über die Schnittstelle (124) eingebbar ist.

5. Optische Messvorrichtung (112) nach einem der vorhergehenden Ansprüche, wobei der Bildaufnahmeparameter mindestens einen Parameter aufweist, ausgewählt aus der Gruppe bestehend aus: Größe, Skalierung, Translation, Rotation, Verdrehung und/oder wobei der Bildaufnahmeparameter mindestens einen Parameter von mindestens einer Einstellung, wie eine Beleuchtungssteuerung, beispielsweise einer Hellfeld-, Dunkelfeld-, Durchlicht- und/oder koaxiale Beleuchtung, und/oder einer Kamera, wie beispielsweise Belichtungszeit und/oder Blendeneinstellung umfasst.

6. Optische Messvorrichtung (112) nach einem der vorhergehenden Ansprüche, wobei die Anzeigevorrichtung (128) eingerichtet ist, um eine schematische Darstellung (130) der aufzunehmenden Bilder mit angepasster Bildaufnahmeposition und/oder angepasstem Bildaufnahmeparameter anzuzeigen und/oder wobei die Anzeigevorrichtung (128) eingerichtet ist, um die schematische Darstellung (130) der aufzunehmenden Bilder mit angepasster Bildaufnahmeposition und/oder angepasstem Bildaufnahmeparameter jeweils zu markieren.

7. Optische Messvorrichtung (112) nach einem der vorhergehenden Ansprüche, wobei mindestens eine Messstrategie über die Schnittstelle (124) bestimmbar ist, wobei die optische Messvorrichtung (112) eingerichtet ist, um die Bildaufnahmepositionen (116) abhängig von der Messstrategie zu bestimmen und/oder wobei die Bildaufnahmepositionen über die Schnittstelle (124) eingebbar sind.

8. Optische Messvorrichtung (112) nach einem der vorhergehenden Ansprüche, wobei die Anzeigevorrichtung (128) eingerichtet ist, um die schematische Darstellung (130) der aufzunehmenden Bilder schematisch mit einer Darstellung eines Messraums und/oder mit einer Darstellung des Messobjekts und/oder mit einer Darstellung eines Messelements (122) anzuzeigen.

9. Vorrichtung (110) zur dimensionellen Vermessung eines Messobjekts, wobei die Vorrichtung (110) ein Koordinatenmessgerät (111), ein Industrieroboter oder ein Mikroskop ist, wobei die Vorrichtung (110) mindestens eine optische Messvorrichtung (112) nach einem der vorhergehenden Ansprüche aufweist.

10. Verfahren zum Erstellen eines Messprogramms zur Bestimmung mindestens einer dimensionellen Vermessung eines Messobjekts mit mindestens einem optischen Sensor (114), wobei das Verfahren die folgenden Schritte aufweist:
a) Bereitstellen einer Messstrategie;
b) Bereitstellen einer Mehrzahl von vorbestimmten und/oder bestimmbaren Bildaufnahmepositionen (116);
c) Anzeigen jeweils einer schematischen Darstellung (130) eines, an der jeweiligen vorbestimmten und/oder bestimmbaren Bildaufnahmeposition (116) aufzunehmenden, Bildes;
d) Bereitstellen mindestens einer Manipulationsinformation einer Datenverarbeitungseinheit (120) über mindestens eine Schnittstelle (124);
e) Anpassen der Bildaufnahmeposition (116) und/oder mindestens eines Bildaufnahmeparameters mindestens eines der aufzunehmenden Bilder in Abhängigkeit von der Manipulationsinformation;
f) Erstellen des Messprogramms zur Aufnahme von Bildern des Messobjekts mit dem optischen Sensor (114) unter Verwendung der angepassten Bildaufnahmeposition und/oder des angepassten Bildaufnahmeparameters.

11. Prüfverfahren zur Bestimmung mindestens einer dimensionellen Eigenschaft eines Messobjekts, wobei das Verfahren die folgenden Schritte aufweist:
I) Bereitstellen einer Mehrzahl von vorbestimmten und/oder bestimmbaren Bildaufnahmepositionen (116);
II) Anzeigen jeweils einer schematischen Darstellung (130) eines, an der jeweiligen vorbestimmten und/oder bestimmbaren Bildaufnahmeposition (116) aufzunehmenden, Bildes;
III) Bereitstellen mindestens einer Manipulationsinformation einer Datenverarbeitungseinheit (120) über mindestens eine Schnittstelle (124);
IV) Anpassen der Bildaufnahmeposition und/oder mindestens eines Bildaufnahmeparameters mindestens eines der aufzunehmenden Bilder in Abhängigkeit von der Manipulationsinformation;
V) Aufnehmen einer Mehrzahl von Bildern des Messobjekts mit mindestens einem optischen Sensor (124) unter Berücksichtigung der angepassten Bildaufnahmepositionen und/oder des angepassten Bildaufnahmeparameters;
VI) Auswerten der aufgenommenen Bilder zur Bestimmung einer Position mindestens eines Messpunkts des Messobjekts.

## Claims

1. Optical measuring device (112) comprising:
- at least one optical sensor (114) configured for optical capture of at least one measurement object at a plurality of image recording positions (116);
- at least one display device (128) configured to display for a plurality of predetermined and/or determinable image recording positions (116) in each case a schematic representation (130) of an image to be recorded at the respective image recording position (116) ;
- at least one data processing unit (120) and at least one interface (124), wherein the interface (124) is configured to provide at least one item of manipulation information to the data processing unit (120), wherein the data processing unit (120) is configured to adapt the image recording position (116) and/or at least one image recording parameter of at least one of the images to be recorded depending on the manipulation information.

2. Optical measuring device (112) according to the preceding claim, wherein the image recording positions (116) and/or the image recording parameters of at least two schematically represented images to be recorded are adaptable, wherein the respective image recording position (116) and/or the respective image recording parameter of the images to be recorded are/is adaptable individually and/or independently of one another.

3. Optical measuring device (112) according to either of the preceding claims, wherein the optical measuring device (112) is configured to the effect that the image recording position (116) and/or the image recording parameter of at least one of the images to be recorded are/is manipulation-protected.

4. Optical measuring device (112) according to any of the preceding claims, wherein the interface (124) is a human-machine interface, wherein the manipulation information is able to be input by a user via the interface (124).

5. Optical measuring device (112) according to any of the preceding claims, wherein the image recording parameter comprises at least one parameter selected from the group consisting of: size, scaling, translation, rotation, torsion, and/or wherein the image recording parameter comprises at least one parameter of at least one setting such as an illumination control, for example of a bright field, dark field, transmitted-light and/or coaxial illumination, and/or of a camera such as, for example, exposure time and/or aperture setting.

6. Optical measuring device (112) according to any of the preceding claims, wherein the display device (128) is configured to display a schematic representation (130) of the images to be recorded with an adapted image recording position and/or an adapted image recording parameter and/or wherein the display device (128) is configured to mark in each case the schematic representation (130) of the images to be recorded with an adapted image recording position and/or an adapted image recording parameter.

7. Optical measuring device (112) according to any of the preceding claims, wherein at least one measurement strategy is determinable via the interface (124), wherein the optical measuring device (112) is configured to determine the image recording positions (116) depending on the measurement strategy and/or wherein the image recording positions are able to be input via the interface (124).

8. Optical measuring device (112) according to any of the preceding claims, wherein the display device (128) is configured to display the schematic representation (130) of the images to be recorded schematically with a representation of a measurement space and/or with a representation of the measurement object and/or with a representation of a measurement element (122).

9. Device (110) for dimensional measurement of a measurement object, wherein the device (110) is a coordinate measuring machine (111), an industrial robot or a microscope, wherein the device (110) comprises at least one optical measuring device (112) according to any of the preceding claims.

10. Method for creating a measurement programme for determining at least one dimensional measurement of a measurement object with at least one optical sensor (114), wherein the method comprises the following steps:
a) providing a measurement strategy;
b) providing a plurality of predetermined and/or determinable image recording positions (116);
c) displaying in each case a schematic representation (130) of an image to be recorded at the respective predetermined and/or determinable image recording position (116);
d) providing at least one item of manipulation information to a data processing unit (120) via at least one interface (124);
e) adapting the image recording position (116) and/or at least one image recording parameter of at least one of the images to be recorded depending on the manipulation information;
f) creating the measurement programme for recording images of the measurement object with the optical sensor (114) using the adapted image recording position and/or the adapted image recording parameter.

11. Test method for determining at least one dimensional property of a measurement object, wherein the method comprises the following steps:
I) providing a plurality of predetermined and/or determinable image recording positions (116);
II) displaying in each case a schematic representation (130) of an image to be recorded at the respective predetermined and/or determinable image recording position (116);
III) providing at least one item of manipulation information to a data processing unit (120) via at least one interface (124);
IV) adapting the image recording position and/or at least one image recording parameter of at least one of the images to be recorded depending on the manipulation information;
V) recording a plurality of images of the measurement object with at least one optical sensor (124) taking account of the adapted image recording positions and/or the adapted image recording parameter;
VI) evaluating the recorded images for determining a position of at least one measurement point of the measurement object.

## Revendications

1. Dispositif de mesure optique (112), comprenant :
- au moins un capteur optique (114), lequel est conçu pour la détection optique d'au moins un objet à mesurer au niveau d'une pluralité de positions d'enregistrement d'image (116) ;
- au moins un dispositif d'affichage (128), lequel est conçu pour, respectivement pour une pluralité de positions d'enregistrement d'image (116) prédéterminées et/ou déterminables, afficher respectivement une représentation schématique (130) d'une image à enregistrer au niveau de la position d'enregistrement d'image (116) respective ;
- au moins une unité de traitement de données (120) et au moins une interface (124), l'interface (124) étant conçue pour fournir au moins une information de manipulation à l'unité de traitement de données (120), l'unité de traitement de données (120) étant conçue pour adapter la position d'enregistrement d'image (116) et/ou au moins un paramètre d'enregistrement d'image d'au moins l'une des images à enregistrer en fonction de l'information de manipulation.

2. Dispositif de mesure optique (112) selon la revendication précédente, la position d'enregistrement d'image (116) et/ou le paramètre d'enregistrement d'image d'au moins deux images à enregistrer représentées schématiquement étant adaptables, la position d'enregistrement d'image (116) respective et/ou le paramètre d'enregistrement d'image respectif des images à enregistrer étant adaptables individuellement et/ou indépendamment l'un de l'autre.

3. Dispositif de mesure optique (112) selon l'une des revendications précédentes, le dispositif de mesure optique (112) étant conçu de sorte que la position d'enregistrement d'image (116) et/ou le paramètre d'enregistrement d'image d'au moins l'une des images à enregistrer est protégé(e) contre les manipulations.

4. Dispositif de mesure optique (112) selon l'une des revendications précédentes, l'interface (124) étant une interface homme-machine, l'information de manipulation pouvant être saisie par un utilisateur par le biais de l'interface (124).

5. Dispositif de mesure optique (112) selon l'une des revendications précédentes, le paramètre d'enregistrement d'image comprenant au moins un paramètre choisi dans le groupe composé de : taille, mise à l'échelle, translation, rotation, retournement et/ou le paramètre d'enregistrement d'image comprenant au moins un paramètre d'au moins un réglage, comme un réglage de l'éclairage, par exemple un éclairage par champ clair, par champ sombre, par lumière transmise et/ou coaxial et/ou d'une caméra, par exemple le temps d'exposition et/ou le réglage de l'obturateur.

6. Dispositif de mesure optique (112) selon l'une des revendications précédentes, le dispositif d'affichage (128) étant conçu pour afficher une représentation schématique (130) des images à enregistrer avec une position d'enregistrement d'image adaptée et/ou un paramètre d'enregistrement d'image adapté et/ou le dispositif d'affichage (128) étant conçu pour marquer respectivement la représentation schématique (130) des images à enregistrer avec une position d'enregistrement d'image adaptée et/ou un paramètre d'enregistrement d'image adapté.

7. Dispositif de mesure optique (112) selon l'une des revendications précédentes, au moins une stratégie de mesure pouvant être déterminée par le biais de l'interface (124), le dispositif de mesure optique (112) étant conçu pour déterminer les positions d'enregistrement d'image (116) en fonction de la stratégie de mesure et/ou la position d'enregistrement d'image pouvant être saisie par le biais de l'interface (124) .

8. Dispositif de mesure optique (112) selon l'une des revendications précédentes, le dispositif d'affichage (128) étant conçu pour afficher schématiquement la représentation schématique (130) des images à enregistrer avec une représentation d'un espace de mesure et/ou avec une représentation de l'objet à mesurer et/ou avec une représentation d'un élément de mesure (122).

9. Dispositif (110) de mesurage dimensionnel d'un objet à mesurer, le dispositif (110) étant un appareil de mesure de coordonnées (111), un robot industriel ou un microscope, le dispositif (110) possédant au moins un dispositif de mesure optique (112) selon l'une des revendications précédentes.

10. Procédé de création d'un programme de mesure pour la détermination d'au moins un mesurage dimensionnel d'un objet à mesurer avec au moins un capteur optique (114), le procédé comprenant les étapes suivantes :
a) fourniture d'une stratégie de mesure ;
b) fourniture d'une pluralité de positions d'enregistrement d'image (116) prédéterminées et/ou déterminables ;
c) affichage respectivement d'une représentation schématique (130) d'une image à enregistrer au niveau de la position d'enregistrement d'image (116) prédéterminée et/ou déterminable respective ;
d) fourniture d'au moins une information de manipulation à une unité de traitement de données (120) par le biais d'au moins une interface (124) ;
e) adaptation de la position d'enregistrement d'image (116) et/ou d'au moins un paramètre d'enregistrement d'image d'au moins l'une des images à enregistrer en fonction de l'information de manipulation ;
f) création d'un programme de mesure pour l'enregistrement d'images de l'objet à mesurer avec le capteur optique (114) en utilisant la position d'enregistrement d'image adaptée et/ou le paramètre d'enregistrement d'image adapté.

11. Procédé de commande pour déterminer au moins une propriété dimensionnelle d'un objet à mesurer, le procédé comprenant les étapes suivantes :
I) fourniture d'une pluralité de positions d'enregistrement d'image (116) prédéterminées et/ou déterminables ;
II) affichage respectivement d'une représentation schématique (130) d'une image enregistrée à la position d'enregistrement d'image (116) prédéterminée et/ou déterminable respective ;
III) fourniture d'au moins une information de manipulation d'une unité de traitement de données (120) par le biais d'au moins une interface (124) ;
IV) adaptation de la position d'enregistrement d'image et/ou d'au moins un paramètre d'enregistrement d'image d'au moins l'une des images à enregistrer en fonction de l'information de manipulation ;
V) enregistrement d'une pluralité d'images de l'objet à mesurer avec au moins un capteur optique (124) en tenant compte des positions d'enregistrement d'image adaptées et/ou du paramètre d'enregistrement d'image adapté ;
VI) interprétation des images enregistrées en vue de déterminer une position d'au moins un point de mesure de l'objet à mesurer.
